(19) Europäisches Patentamt / European Patent Office / Office européen des brevets

(11) **EP 2 391 116 A1**

(12) **EUROPEAN PATENT APPLICATION**

(43) Date of publication:
**30.11.2011 Bulletin 2011/48**

(51) Int Cl.:
***H04N 1/60*** (2006.01)

(21) Application number: **11163119.8**

(22) Date of filing: **20.04.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.05.2010 JP 2010122031**

(71) Applicant: **Canon Kabushiki Kaisha Tokyo 146-8501 (JP)**

(72) Inventor: **Hasegawa, Naoyuki Tokyo, Tokyo 146-8501 (JP)**

(74) Representative: **TBK Bavariaring 4-6 80336 München (DE)**

(54) **Image processing apparatus and image processing method**

(57)     A virtual environment corresponding to the viewing environment of a printed material is generated. By referring to a color transition characteristic, the color values of the diffuse component and the glossy component of light reflected by a virtual printed material in the virtual environment are obtained. The color value of the diffuse component is mapped in the color gamut for a monitor for displaying the image of the printed material. The color value of the glossy component is mapped in the color gamut for the monitor. The color values of the diffuse and glossy components after the color gamut mapping are synthesized to generate the image of the printed material.

**F I G. 3**

**Description**

BACKGROUND OF THE INVENTION

Field of the Invention

The present invention relates to an image processing apparatus and image processing method and, more particularly, to an image processing apparatus and image processing method for performing soft-proofing of a printed material.

Description of the Related Art

A process of simulating the finish of a material printed by a printer by using a computer device (PC), and displaying the simulation result on a monitor is called soft-proofing. In soft-proofing, color matching is done for the color component (to be referred to as a diffuse component) of light reflected by a printed material, and the color is faithfully reproduced on the monitor. Recently in soft-proofing, it is becoming popular to simulate not only the diffuse component but also the glossy component (reflection component of an illumination image) of a printed material using computer graphics (CG). In general, the glossy component has high luminance and often exceeds the color reproductive range (color gamut) of the monitor. Considering this, there is proposed a technique of performing color matching for a reflected component (to be referred to as a composite color component) containing both the diffuse and glossy components in soft-proofing (for example, Japanese Patent Laid-Open No. 2009-272705 (patent literature 1)).

However, if the color gamut of the composite color component is compressed, even the diffuse component in the color gamut of the monitor is compressed, and the appearance of the diffuse component at a portion where no illumination image is reflected does not match the color of the printed material. Along with color change from the diffuse component to the glossy component on a printed material, the luminance gradually increases to exceed the color gamut of the monitor. The composite color component needs to be mapped in the color gamut of the monitor to reflect this color change.

SUMMARY OF THE INVENTION

The present invention in its first aspect provides an image processing apparatus as specified in claims 1 to 6.

The present invention in its second aspect provides an image processing method as specified in claim 7.

According to these aspects, the appearances of the diffuse and glossy components of a printed material in an actual environment, and color transition from the diffuse component to the glossy component can be faithfully simulated in soft-proofing.

Further features of the present invention will become apparent from the following description of exemplary embodiments with reference to the attached drawings.

BRIEF DESCRIPTION OF THE DRAWINGS

Fig. 1 is a block diagram for explaining the arrangement of an image processing apparatus in an embodiment.

Figs. 2A and 2B are block diagrams for explaining an outline of soft-proofing.

Fig. 3 is a flowchart for explaining details of soft-proofing in the embodiment.

Fig. 4 is a view for explaining generation of a virtual environment.

Figs. 5A and 5B are a table and view, respectively, for explaining a color transition characteristic.

Figs. 6A and 6B are conceptual views for explaining a reflection model.

Fig. 7 is a flowchart for explaining a color matching process for the diffuse component.

Fig. 8 is a view for explaining color gamut mapping for the glossy component.

Fig. 9 is a flowchart for explaining a color matching process for the glossy component.

Fig. 10 is a view for explaining color gamut mapping for the glossy component in the second embodiment.

Fig. 11 is a flowchart for explaining a color matching process for the glossy component in the second embodiment.

Fig. 12 is a flowchart for explaining details of soft-proofing in the third embodiment.

Fig. 13 is a table for explaining a color transition characteristic table considering the incident angle and the angle in the viewpoint direction.

DESCRIPTION OF THE EMBODIMENTS

An image processing apparatus and image processing method according to embodiments of the present invention will now be described in detail with reference to the accompanying drawings.

First Embodiment

[Arrangement of Apparatus]

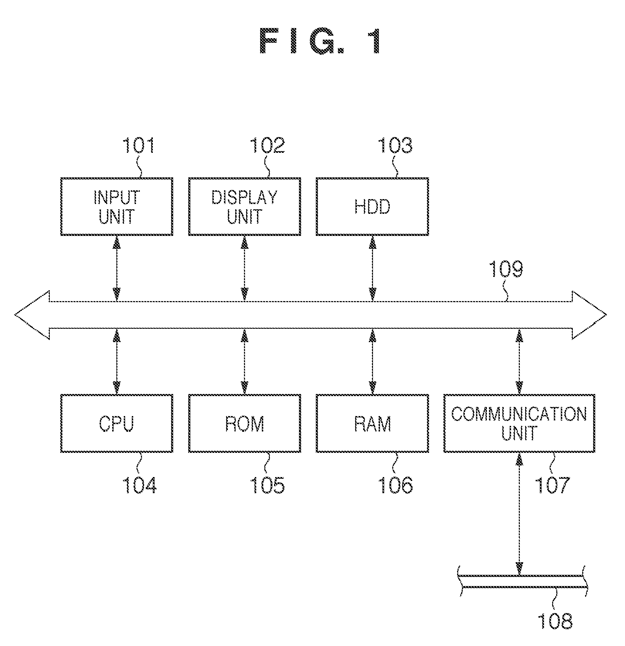

The arrangement of an image processing apparatus in the embodiment will be described with reference to the block diagram of Fig. 1. A microprocessor (CPU) 104 controls the following components via a system bus 109 by executing various programs stored in a read-only memory (ROM) 105, hard disk drive (HDD) 103, and the like by using a random access memory (RAM) 106 as a work memory.

An input unit 101 includes a keyboard and a pointing system such as a mouse, and inputs instructions and data from the user. A display unit 102 is a monitor such as a liquid crystal display, and displays a graphical user interface (GUI). The HDD 103 stores various data and programs including image data and data necessary for processes to be described later. A communication unit 107 is a network interface for communicating with an external device via a network 108. The network 108 can be a wired network, wireless network, serial bus, or the like.

The CPU 104 loads, from the ROM 105 or HDD 103 to the RAM 106, a program for implementing a process to be described later, and executes it. However, the CPU 104 may download the program or data from an external server to the RAM 106 or the like via the communication unit 107.

[Soft-proofing]

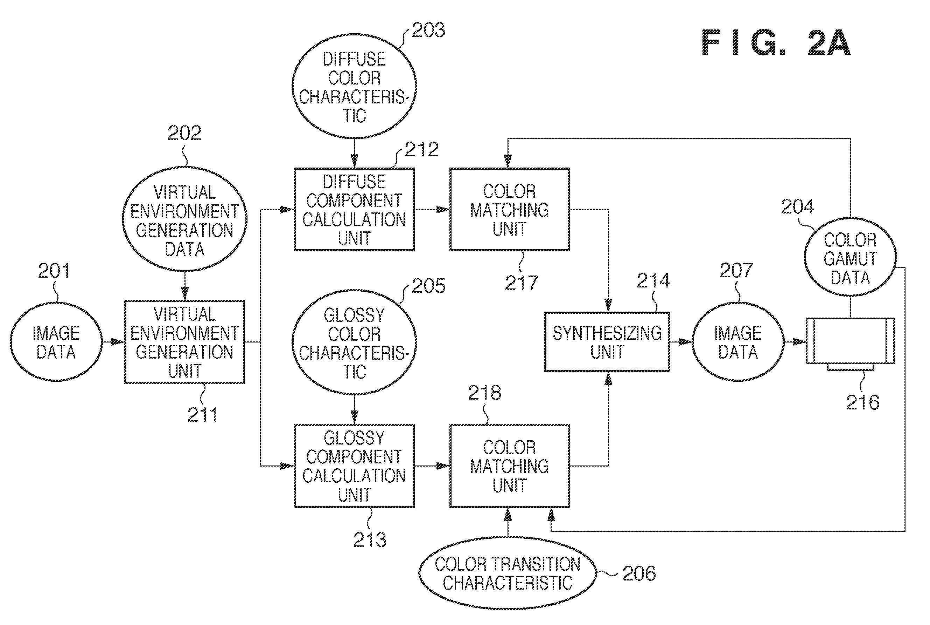

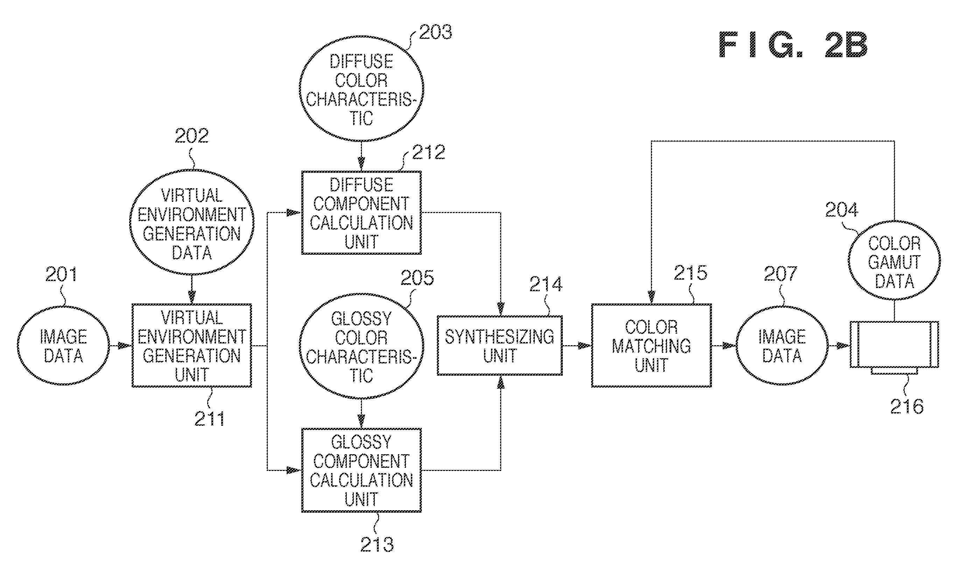

An outline of soft-proofing will be explained with reference to the block diagrams of Figs. 2A and 2B.

Fig. 2B shows soft-proofing disclosed in patent literature 1. A virtual environment generation unit 211 generates a virtual environment using print image data 201 and virtual environment generation data 202. A diffuse component calculation unit 212 calculates the color value of the diffuse component in the virtual environment based on a diffuse color characteristic 203 obtained by, for example, measuring a printed material. A glossy component calculation unit 213 calculates the color value of the glossy component in the virtual environment based on a glossy color characteristic 205 obtained by, for example, measuring a printed material.

A synthesizing unit 214 synthesizes the diffuse and glossy components into a composite color component. A color matching unit 215 maps the color value of the composite color component in the color gamut based on color gamut data 204 of a monitor 216. That is, the color matching unit 215 performs color gamut mapping for the monitor, generating display image data 207. The monitor 216 displays an image represented by the image data 207.

Fig. 2A shows soft-proofing in the embodiment. The arrangement in Fig. 2A is different from that in Fig 2B in that color matching units 217 and 218 map the diffuse and glossy components in the color gamut before the synthesizing unit 214 synthesizes them.

The color matching unit 217 maps the color value of the diffuse component in the color gamut based on the color gamut data 204 of the monitor 216. The color matching unit 218 maps the color value of the diffuse component based on the color gamut data 204 of the monitor 216, and a color transition characteristic 206 which is obtained by, for example, measuring a printed material and represents color transition from the diffuse component to the glossy component. Note that the color matching unit 218 performs color gamut mapping for the monitor so that color transition from the diffuse component to the glossy component becomes linear in the color gamut of the monitor 216. The synthesizing unit 214 synthesizes the diffuse and glossy components after color gamut mapping, generating the display image data 207.

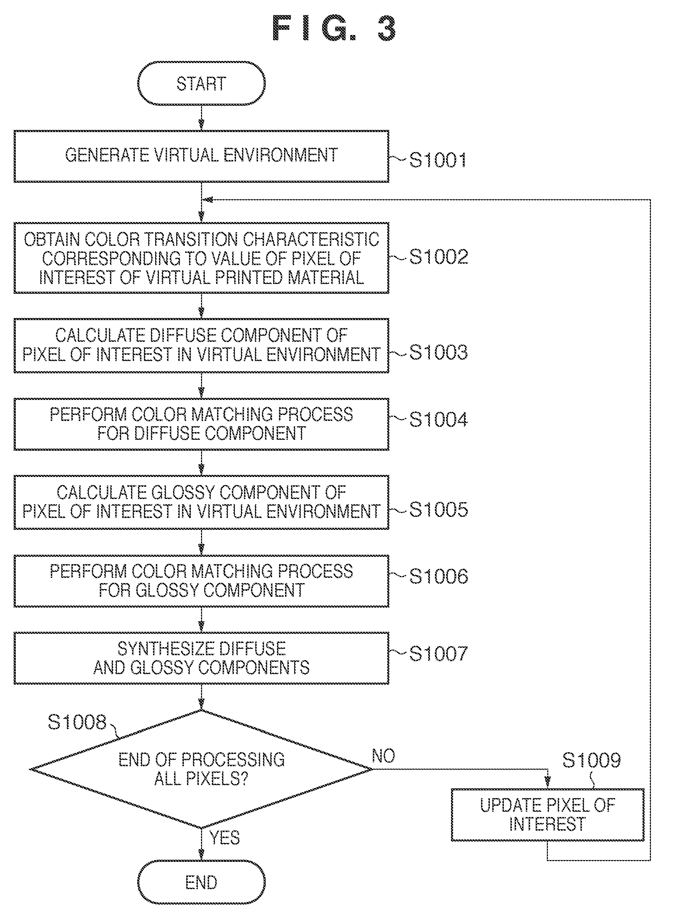

Details of soft-proofing in the embodiment will be explained with reference to the flowchart of Fig. 3. Note that the CPU 104 executes the process shown in Fig. 3 in accordance with a program.

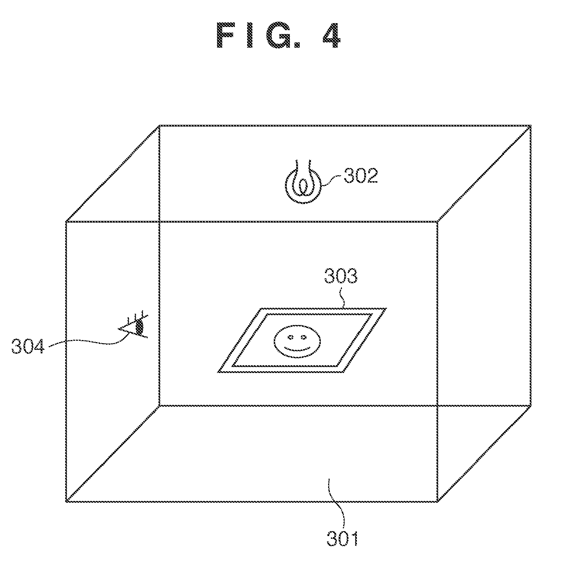

By using CG, the CPU 104 generates an environment where a printed material is virtually viewed (step S1001). Generation of the virtual environment will be explained with reference to Fig. 4. That is, a virtual space 301 is generated by setting a three-dimensional (3D) object having a wall, ceiling, floor, and the like, as shown in Fig. 4. A virtual printed material 303 and a virtual illumination 302 used to view the virtual printed material 303 are arranged near the center of the virtual space 301. Also, a virtual viewpoint 304 is arranged.

To make the virtual environment accurately correspond to an environment (to be referred to as an actual environment) where the printed material is actually viewed, the virtual space 301 and virtual illumination 302 are set based on data (virtual environment generation data 202) obtained by measuring the brightness and color distribution of the actual environment using a colorimeter or the like. Instead of measuring the virtual environment generation data 202, virtual environment generation data preset in CG software may be used.

The print image data 201 is set for the virtual printed material 303. After the end of these settings, the colors of the diffuse and glossy components of light which has been emitted from the virtual space 301 or virtual illumination 302, reflected by the virtual printed material 303, and travels toward the virtual viewpoint 304 can be calculated in steps S1003 and S1005 (to be described later).

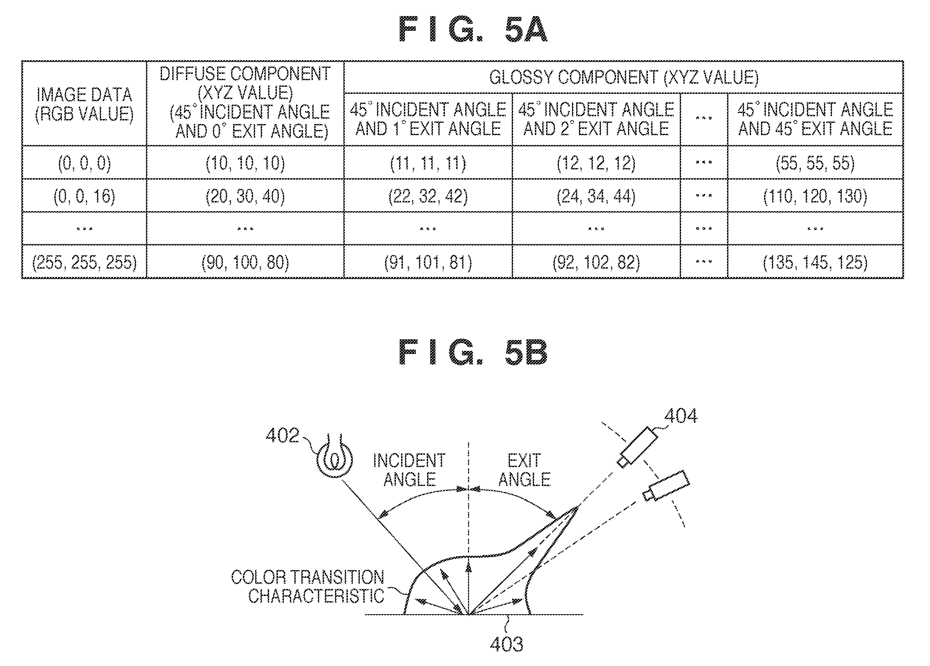

Then, the CPU 104 obtains the color transition characteristic 206 corresponding to the value (for example, RGB value) of the pixel of interest of the virtual printed material 303 (step S1002). The color transition characteristic 206 will be explained with reference to Figs. 5A and 5B. The color transition characteristic 206 is data obtained by measuring the colors (for example, XYZ values) of the diffuse and glossy components for each of the patches formed on a printing medium based on different image data.

As shown in Fig. 5B, the color transition characteristic 206 is an XYZ value obtained by illuminating a printed material 403 by an illumination 402 in an actual environment, and measuring reflected light at each exit angle with respect to incident light at an incident angle of 45° using a goniophotometer 404. Note that the color transition characteristic 206 is not limited to the XYZ value, and may be, for example, the Lab value in the L*a*b* space. That is, the color transition characteristic 206 is expressed as a table representing a diffuse component which is the XYZ value of reflected light at an exit angle of 0° with respect to each RGB value of image data, and a glossy component which is the XYZ value of reflected light at an exit angle of more than 0° to 45° or less, as shown in Fig. 5A.

The CPU 104 calculates a diffuse component $XYZ_{df}$ in of the pixel of interest in the virtual environment in accordance with equation (1) (step S1003):

$$XYZ_{df}in = XYZ_{df}tbl \times (N \cdot L) \qquad \ldots(1)$$

where N is the vector indicating the normal direction of the surface of the virtual printed material 303,
L is the vector indicating the direction of the virtual illumination 302,
$XYZ_{df}$ tb1 is the XYZ value of a diffuse component contained in the color transition characteristic 206, and
(N-L) is the inner product of the vectors N and L.

After that, the CPU 104 performs a color matching process for the diffuse component $XY2_{df}$ in, and calculates a diffuse component $XY2_{df}$ out to be displayed on the monitor 216 (step S1004), details of which will be described later. The CPU 104 calculates a glossy component $XYZ_{sp}$ in of the pixel of interest in the virtual environment in accordance with equation (2) (step S1005):

$$R = -E + 2(N \cdot E)N$$

$$XYZ_{sp}in = I_{ill} \times XYZ_{sp}tbl \times (L \cdot R)^n \qquad \ldots(2)$$

where E is the vector indicating the direction of the line of sight,
R is the vector indicating the specular reflection direction of the vector E,
$I_{ill}$ is the illumination intensity set for the virtual illumination 302,
$XYZ_{sp}$ tb1 is the XYZ value of a glossy component contained in the color transition characteristic 206 and is the XYZ value of an exit angle corresponding to the an angle φ defined by the vectors R and L, and
n is the parameter indicating the degree of divergence of the gloss.

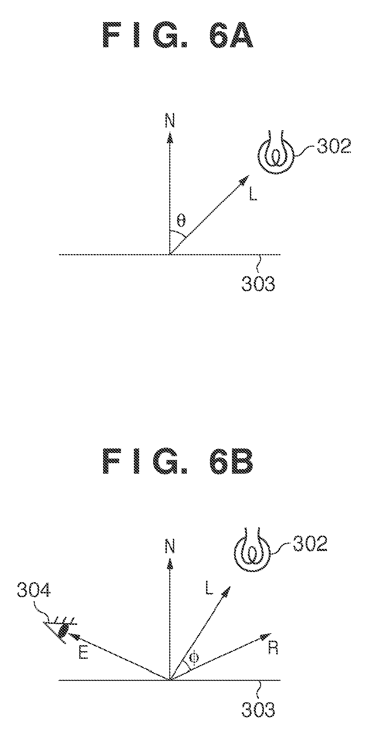

A reflection model will be explained with reference to the conceptual views of Figs. 6A and 6B. Equation (1) is a diffuse component calculation equation based on a diffuse reflection model shown in Fig. 6A. Equation (1) calculates the XYZ value of a diffuse component corresponding to the positional relationship between the virtual illumination 302 and the virtual printed material 303. Equation (2) is a glossy component calculation equation based on a glossy reflection model shown in Fig. 6B.

Then, the CPU 104 performs a color matching process for the glossy component $XYZ_{sp}$ in, and calculates a glossy component $XYZ_{sp}$ out to be displayed on the monitor 216 (step S1006), details of which will be described later.

The CPU 104 synthesizes the diffuse component $XYZ_{df}$ out and glossy component $XYZ_{sp}$ out to calculate a composite color component XYZout of the pixel of interest in accordance with equation (3), and converts the XYZ value into, for example, an RGB value (step S1007):

$$XYZout = XYZ_{df}out + XYZ_{sp}out \qquad \ldots(3)$$

Note that conversion from an XYZ value into an RGB value in step S1007 suffices to use, for example, the following conversion equation from an XYZ value into an sRGB value:

$$\begin{vmatrix} R_{Linear} \\ G_{Linear} \\ B_{Linear} \end{vmatrix} = \begin{vmatrix} 3.241 & -1.537 & -0.499 \\ -0.969 & 1.876 & 0.042 \\ 0.056 & -0.204 & 1.057 \end{vmatrix} \begin{vmatrix} X \\ Y \\ Z \end{vmatrix}$$

$$\begin{vmatrix} R \\ G \\ B \end{vmatrix} = \begin{vmatrix} R_{Linear}^{0.45} \\ G_{Linear}^{0.45} \\ B_{Linear}^{0.45} \end{vmatrix} \qquad \ldots (4)$$

Thereafter, the CPU 104 determines whether all the pixels of the image data 201 have been processed (step S1008). If an unprocessed pixel remains, the CPU 104 updates the pixel of interest (step S1009), and repeats the processes in steps S1002 to S1007. If all the pixels have been processed, the CPU 104 supplies, to the monitor 216, the image data 207 obtained by the synthesis in step S1007.

•Color Matching Process for Diffuse Component

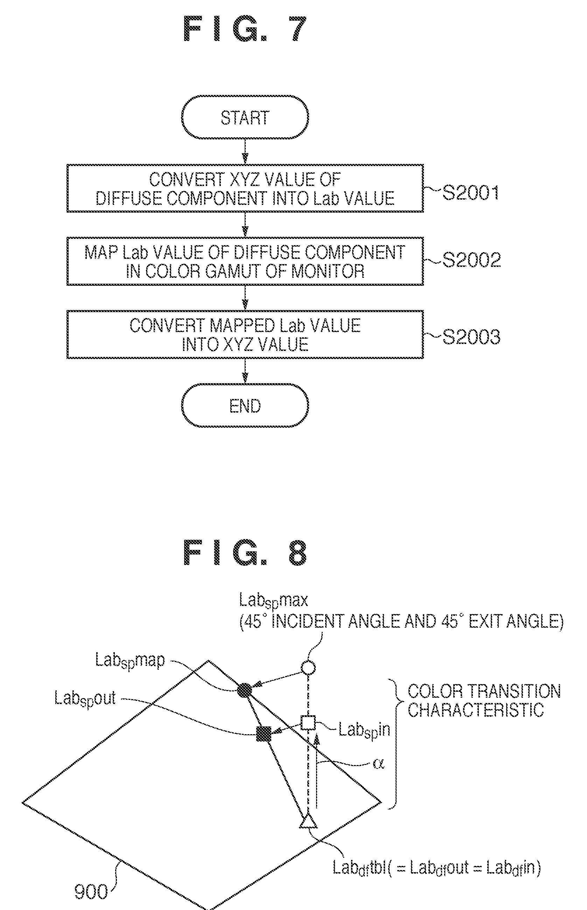

The color matching process for the diffuse component (step S1004) will be explained with reference to the flowchart of Fig. 7. First, the XYZ value $XYZ_{df}$ in of the diffuse component is converted into a Lab value $Lab_{df}$ in in accordance with routine (5) (step S2001):

```
if (X_dfin > 0.008856)

        fx = (X_dfin/Xw)^1/3;

else

        fx = 903.3 × (X_dfin/Xw)/116;

if (Y_dfin > 0.008856)

        fy = (Y_dfin/Yw)^1/3;

else

        fy = 903.3 × (Y_dfin/Yw)/116;

if (Z_dfin > 0.008856)

        fz = (Z_dfin/Zw)^1/3;

else
```

```
    fz = 903.3 × (Z_df in/Zw)/116;

L_df in = 116 × fy - 16;

a_df in = 500 × (fx - fy);

b_df in = 500 × (fy - fz);              ...(5)
```

where Xw, Yw, and Zw are the X, Y, and Z values (measurement values) of a white diffusion plate arranged in the printed material viewing environment.

Then, color gamut mapping is performed to map Lab$_{df}$ in at Lab$_{df}$ out (step S2002). The Lab value Lab$_{df}$ out after color gamut mapping is converted into an XYZ value XY2$_{df}$ out in accordance with routine (6) (step S2003):

```
if (yr > 0.008856)

      fy = (L_df out + 16)/116;

else

      fy = (yr × 903.3 + 16)/116;

fx = a_df out/500 + fy;

fz = fy - b_df out/200;

if (fx³ > 0.008856)

      xr = fx³;

else

      xr = (116 × fx - 16)/903.3;

if (L_df out > 903.3 × 0.008856)

      yr = {(L_df out + 16)/116}³;

else

      yr = L_df out/903.3;

if (fz³ > 0.008856)

      zr = fz³;

else

      zr = (116 × fz - 16)/903.3;
```

$$X_{df}out = xr \times Xr;$$

$$Y_{df}out = xy \times Yr;$$

$$Z_{df}out = zr \times Zr; \qquad \ldots(6)$$

where Xr, Yr, and Zr are the X, Y, and Z values (measurement values) of the white point of the monitor 216.

Note that color gamut mapping is generally a process of compressing an input color gamut into an output color gamut. Color gamut mapping adopts a method such as perceptual mapping of minimizing the distance between the mapping source and the mapping destination in the L*a*b* space, or colorimetric mapping of obtaining a colorimetric match. However, the diffuse component is measured from a patch on a printed material and thus generally exists within the color gamut of the monitor 216. Hence, the color matching process for the diffuse component is mainly a process of converting a color dependent on the white point of viewing light into a color considering the white point of the monitor 216. The color space used in color gamut mapping is not limited to the CIE L*a*b* space, but may be an appearance space (CIE J*a*b* space) based on CIECAM02.

•Color Matching Process for Glossy Component

As described above, along with color transition from the diffuse component to the glossy component on a printed material, the luminance gradually increases to exceed the color gamut of the monitor 216. The composite color component needs to be mapped in the color gamut of the monitor 216 to reflect this color transition. In other words, the embodiment performs color gamut mapping so that color transition from the diffuse component to the glossy component on a printed material is smoothly reproduced on an image displayed on the monitor 216.

Color gamut mapping for the glossy component will be explained with reference to Fig. 8. As shown in Fig. 8, assume that the diffuse component $Lab_{df}$ tb1 falls within a color gamut 900 of the monitor 216, and a glossy component (maximum glossy component value) $Lab_{sp}$max at an incident angle of 45° and an exit angle of 45° falls outside the color gamut of the monitor 216. That is, a line which connects the diffuse component $Lab_{df}$tbl and glossy component $Lab_{sp}$max is the color transition characteristic 206. For descriptive convenience, assume that the diffuse component $Lab_{df}$tbl falls within the color gamut 900, and $Lab_{df}$out = $Lab_{df}$in = $Lab_{df}$tbl.

The glossy component $Lab_{sp}$max is mapped in the color gamut 900 (for example, a color gamut boundary at which the color difference is minimum), mapping the color transition characteristic 206 in the color gamut 900. Then, the degree of transition (transition degree $\alpha$) indicating the degree of transition from the diffuse component $Lab_{df}$in to the glossy component $Lab_{sp}$ in is calculated. Based on the transition degree $\alpha$, the mapping destination $Lab_{sp}$out of the glossy component $Lab_{sp}$in is determined.

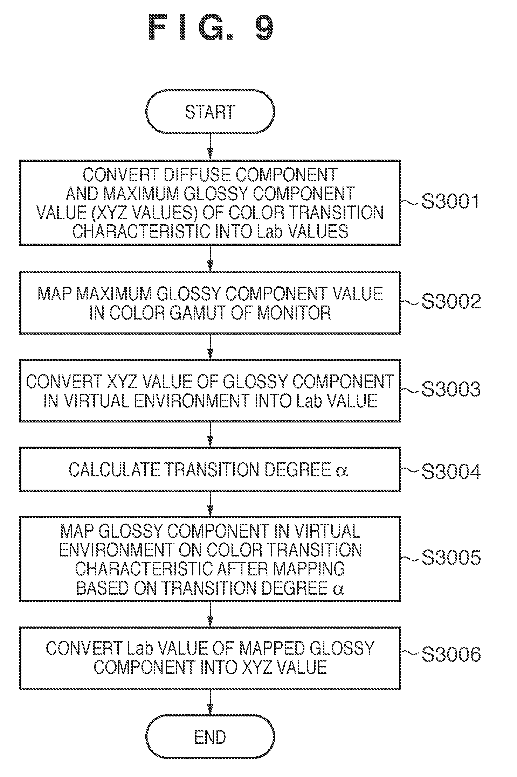

The color matching process for the glossy component (step S1006) will be explained with reference to the flowchart of Fig. 9. First, the diffuse component $XYZ_{df}$tbl and maximum glossy component value $XYZ_{sp}$max of the color transition characteristic 206 are converted into Lab values $Lab_{df}$in and $Lab_{sp}$max in accordance with routine (5) (step S3001). By the same method as that in step S2002, the maximum glossy component value $Lab_{sp}$max is mapped in the color gamut 900, obtaining $Lab_{sp}$map (step S3002). Further, the XYZ value $XYZ_{sp}$in of the glossy component is converted into a Lab value $Lab_{sp}$in in accordance with routine (5) (step S3003).

The transition degree $\alpha$ is calculated in accordance with equation (7) (step S3004):

$$\alpha = (Lab_{sp}in - Lab_{df}in)/(Lab_{sp}max - Lab_{df}in)$$

$$\ldots(7)$$

Note that the transition degree $\alpha$ indicates the ratio of a glossy component added to light reflected by the pixel of interest.

Based on the transition degree $\alpha$, $Lab_{sp}$in is mapped at $Lab_{sp}$out on the color transition characteristic after mapping in accordance with equation (8) (step S3005):

$$Lab_{sp}out = \alpha(Lab_{sp}map - Lab_{df}out) + Lab_{df}out$$

$$\ldots(8)$$

Then, the mapped Lab value $Lab_{sp}out$ is converted into an XYZ value $XY2_{sp}out$ in accordance with routine (6) (step S3006).

In this fashion, the appearances of the diffuse and glossy components of a printed material in an actual environment, and color transition from the diffuse component to the glossy component can be faithfully simulated in soft-proofing using CG.

In the above description, the relationship between the virtual illumination 302 and the virtual printed material 303 is not particularly defined. When a color transition characteristic table for an incident angle of 45° shown in Fig. 5A is used, a more faithful simulation can be achieved by setting an incident angle of 45° for light incident on the virtual printed material 303 from the virtual illumination 302.

The XYZ values of the diffuse and glossy components are affected by the characteristics of the light source such as the color temperature and spectral distribution characteristic. Further, the glossy component is affected by the glossy characteristic of a printing medium for a printed material using dye ink, and the surface roughness of a printing medium for a printed material using pigment ink or toner. Considering them, the color transition characteristic table needs to be created in correspondence with the characteristics of the light source and the surface characteristics of the printing medium.

Second Embodiment

An image processing apparatus and method according to the second embodiment of the present invention will be described below. In the second embodiment, the same reference numerals as those in the first embodiment denote the same parts, and a detailed description thereof will not be repeated.

The first embodiment has described an example of linearly mapping the color transition characteristic 206 in the color gamut 900, as shown in Fig. 8. The second embodiment will explain an example of mapping a color transition characteristic 206 like a curve.

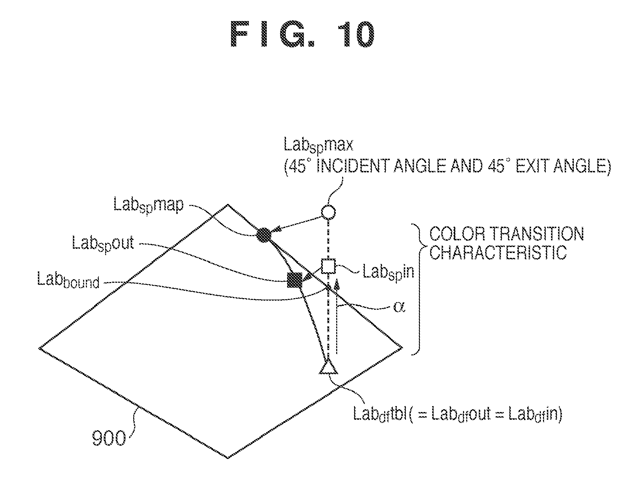

Color gamut mapping for the glossy component in the second embodiment will be explained with reference to Fig. 10. As shown in Fig. 10, similar to the first embodiment, the maximum glossy component value $Lab_{sp}max$ is mapped in a color gamut 900 (for example, a color gamut boundary at which the color difference is minimum), mapping the color transition characteristic 206 in the color gamut 900. Then, the transition degree $\alpha$ indicating the degree of transition from the diffuse component $Lab_{df}in$ to the glossy component $Lab_{sp}in$ is calculated. Based on the transition degree $\alpha$, the mapping destination $Lab_{sp}out$ of the glossy component $Lab_{sp}in$ is determined. In the second embodiment, however, the mapping destination $Lab_{sp}out$ exists on a curve which connects the diffuse component $Lab_{df}out$ and mapped glossy component $Lab_{sp}map$, as shown in Fig. 10.

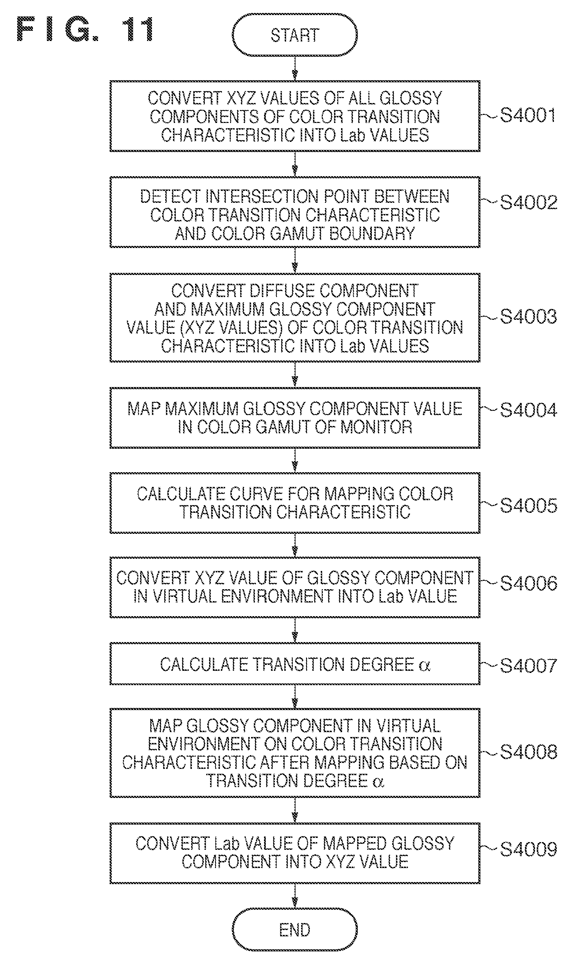

A color matching process for the glossy component (step S1006) in the second embodiment will be explained with reference to the flowchart of Fig. 11. First, all the glossy components $XYZ_{sp}tbl$ of the color transition characteristic 206 are converted into Lab values $Lab_{sp}tbl$ in accordance with routine (5) (step S4001). Then, an intersection point $Lab_{bound}$ between the color transition characteristic $Lab_{sp}tbl$ and the boundary of the color gamut 900 is detected (step S4002).

The diffuse component $XYZ_{df}tbl$ and maximum glossy component value $XYZ_{sp}max$ of the color transition characteristic 206 are converted into Lab values $Lab_{df}in$ and $Lab_{sp}max$ in accordance with routine (5) (step S4003). By the same method as that in step S2002, the maximum glossy component value $Lab_{sp}max$ is mapped in the color gamut 900, obtaining $Lab_{sp}map$ (step S4004). Further, as shown in Fig. 10, a quadratic curve is calculated, which passes through $Lab_{df}in$ (first mapping point) and $Lab_{sp}map$ (second mapping point), does not pass outside the color gamut 900 between the first and second mapping points, and comes closest to the intersection point $Lab_{bound}$ (step S4005). This quadratic curve (quadratic function f) serves as a color transition characteristic after mapping. Note that the curve is calculated using spline interpolation or the like.

After that, the XYZ value $XYZ_{sp}in$ of the glossy component is converted into a Lab value $Lab_{sp}in$ in accordance with routine (5) (step S4006). The transition degree $\alpha$ is calculated in accordance with equation (7) (step S4007). Based on the transition degree $\alpha$ and the quadratic function f, $Lab_{sp}in$ is mapped at $Lab_{sp}out$ on the color transition characteristic after mapping in accordance with equation (10) (step S4008):

$$Lab_{sp}out = \alpha\{f(Lab_{sp}map) - f(Lab_{df}out)\} + Lab_{df}out$$

$$...(10)$$

Then, the mapped Lab value $Lab_{sp}out$ is converted into an XYZ value $XY2_{sp}out$ in accordance with routine (6) (step S4009).

The color transition characteristic after mapping in the second embodiment can provide a more smooth color transition and express a change of the glossy component more naturally, compared to the linear color transition characteristic after mapping in the first embodiment.

Third Embodiment

An image processing apparatus and method according to the third embodiment of the present invention will be described below. In the third embodiment, the same reference numerals as those in the first and second embodiments denote the same parts, and a detailed description thereof will not be repeated.

In the first and second embodiments, the color transition characteristic 206 from the diffuse component to the glossy component represents the color at each exit angle with respect to the 45° incident light. The third embodiment will explain a method of faithfully simulating the appearances of the diffuse and glossy components of a printed material in an actual environment, and color transition from the diffuse component to the glossy component using a color transition characteristic corresponding to an arbitrary incident angle.

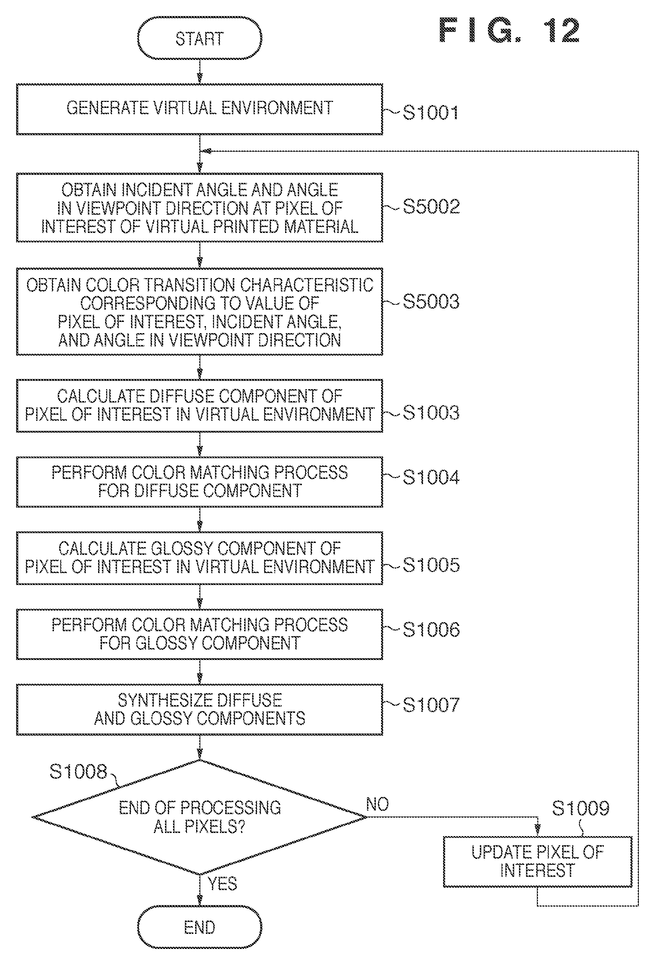

Details of soft-proofing in the third embodiment will be explained with reference to the flowchart of Fig. 12. Note that a CPU 104 executes the process shown in Fig. 12 in accordance with a program.

By using CG, similar to the first embodiment, the CPU 104 generates an environment where a printed material is virtually viewed (step S1001). The CPU 104 obtains an incident angle from a virtual illumination 302, and an angle (to be referred to as an angle in the viewpoint direction) indicating the direction of a virtual viewpoint 304 at the pixel of interest of a virtual printed material 303 (step S5002). Then, the CPU 104 obtains a color transition characteristic 206 corresponding to the value (for example, RGB value) of the pixel of interest, the obtained incident angle, and the obtained angle in the viewpoint direction (step S5003). Subsequent steps (steps S1003 to S1009) are the same as those in the first embodiment, and a description thereof will not be repeated. However, unlike the first embodiment, the process returns to step S5002 after updating the pixel of interest in step S1009.

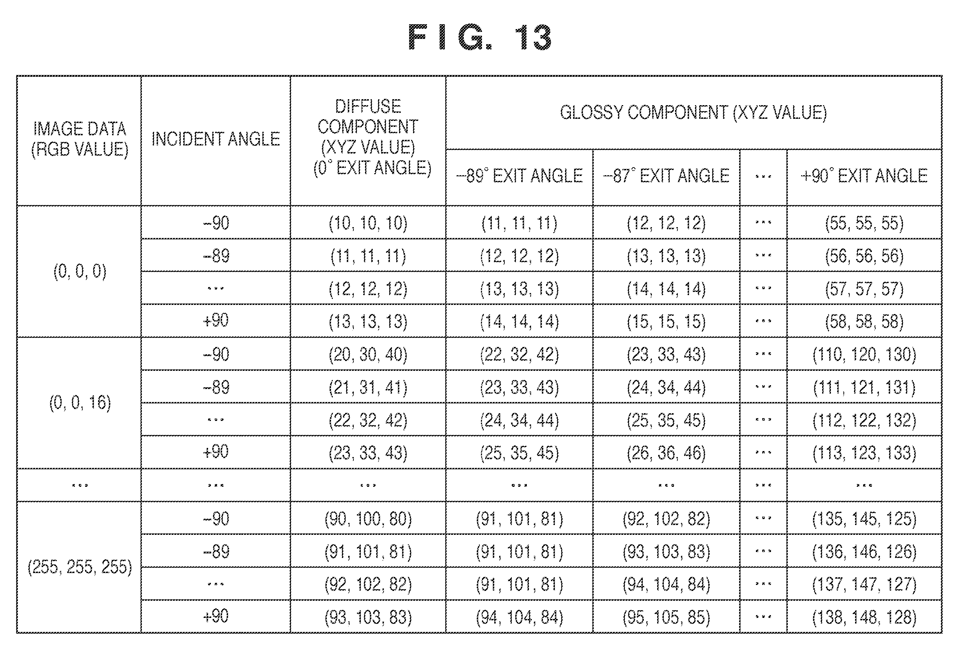

A color transition characteristic table considering the incident angle and the angle in the viewpoint direction will be explained with reference to Fig. 13. For example, a color transition table is prepared, which represents the XYZ value (diffuse component) of reflected light at an exit angle of 0° and the XYZ value (glossy component) of reflected light at an exit angle of more than -90° to +90° or less when the incident angle is changed within the range of -90° to +90° with respect to each RGB value of image data. Note that the color transition characteristic table needs to be created in correspondence with the characteristics of the light source such as the color temperature and spectral distribution characteristic.

Other Embodiments

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (for example, computer-readable medium).

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions. A virtual environment corresponding to the viewing environment of a printed material is generated. By referring to a color transition characteristic, the color values of the diffuse component and the glossy component of light reflected by a virtual printed material in the virtual environment are obtained. The color value of the diffuse component is mapped in the color gamut for a monitor for displaying the image of the printed material. The color value of the glossy component is mapped in the color gamut for the monitor. The color values of the diffuse and glossy components after the color gamut mapping are synthesized to generate the image of the printed material.

**Claims**

1. An image processing apparatus **characterized by** comprising:

   memory means for storing a color transition characteristic indicating color transition from a diffuse component to a glossy component of light reflected by a printed material;
   generating means for generating a virtual environment corresponding to a viewing environment of the printed material;
   obtaining means for obtaining color values of a diffuse component and a glossy component of light reflected by a virtual printed material in the virtual environment by referring to the color transition characteristic;
   first mapping means for performing color gamut mapping of the color value of the diffuse component for a monitor for displaying an image of the printed material;
   second mapping means for performing color gamut mapping of the color value of the glossy component for the monitor; and
   synthesizing means for synthesizing the color value of the diffuse component and the color value of the glossy component after the color gamut mapping to generate the image of the printed material.

2. The apparatus according to claim 1, wherein the first mapping means maps, at a first mapping point in a color gamut of the monitor, a color value of a diffuse component of light reflected by a pixel of interest of the virtual printed material, and
   wherein the second mapping means maps a color value of a glossy component of the light reflected by the pixel of interest on a line which connects the first mapping point and a second mapping point obtained by mapping, in the color gamut, a maximum value of the color value of the glossy component of the light reflected by the pixel of interest.

3. The apparatus according to claim 1, wherein the first mapping means maps, at a first mapping point in a color gamut of the monitor, a color value of a diffuse component of light reflected by a pixel of interest of the virtual printed material, and
   wherein the second mapping means maps a color value of a glossy component of the light reflected by the pixel of interest on a curve which connects the first mapping point and a second mapping point obtained by mapping, in the color gamut, a maximum value of the color value of the glossy component of the light reflected by the pixel of interest.

4. The apparatus according to claim 3, wherein the first mapping means detects an intersection point between the color transition characteristic and a boundary of the color gamut, and calculates, as the curve, a quadratic curve which passes through the first mapping point and the second mapping point, does not pass outside the color gamut, and comes closest to the intersection point.

5. The apparatus according to any one of claims 2 to 4, wherein the second mapping means calculates, from a ratio of a glossy component added to the light reflected by the pixel of interest, a mapping destination of the color value of the glossy component of the light reflected by the pixel of interest.

6. The apparatus according to preceding claim, further comprising display means for displaying the image generated by the synthesizing means on the monitor.

7. An image processing method **characterized by**:

   storing a color transition characteristic indicating color transition from a diffuse component to a glossy component of light reflected by a printed material;
   generating a virtual environment corresponding to a viewing environment of the printed material;
   obtaining color values of a diffuse component and a glossy component of light reflected by a virtual printed material in the virtual environment;
   performing color gamut mapping of the color value of the diffuse component for a monitor for displaying an image of the printed material;
   performing color gamut mapping of the color value of the glossy component for the monitor; and
   synthesizing the color value of the diffuse component and the color value of the glossy component after the color gamut mapping to generate the image of the printed material.

8. A storage medium storing program code for programming processing means to carry out a method in accordance with claim 7.

# F I G. 1

F I G. 2A

# F I G. 2B

# FIG. 3

START

GENERATE VIRTUAL ENVIRONMENT — S1001

OBTAIN COLOR TRANSITION CHARACTERISTIC CORRESPONDING TO VALUE OF PIXEL OF INTEREST OF VIRTUAL PRINTED MATERIAL — S1002

CALCULATE DIFFUSE COMPONENT OF PIXEL OF INTEREST IN VIRTUAL ENVIRONMENT — S1003

PERFORM COLOR MATCHING PROCESS FOR DIFFUSE COMPONENT — S1004

CALCULATE GLOSSY COMPONENT OF PIXEL OF INTEREST IN VIRTUAL ENVIRONMENT — S1005

PERFORM COLOR MATCHING PROCESS FOR GLOSSY COMPONENT — S1006

SYNTHESIZE DIFFUSE AND GLOSSY COMPONENTS — S1007

S1008 — END OF PROCESSING ALL PIXELS? — NO

S1009 — UPDATE PIXEL OF INTEREST

YES

END

# FIG. 4

# FIG. 5A

| IMAGE DATA (RGB VALUE) | DIFFUSE COMPONENT (XYZ VALUE) (45° INCIDENT ANGLE AND 0° EXIT ANGLE) | GLOSSY COMPONENT (XYZ VALUE) | | | |
|---|---|---|---|---|---|
| | | 45° INCIDENT ANGLE AND 1° EXIT ANGLE | 45° INCIDENT ANGLE AND 2° EXIT ANGLE | ... | 45° INCIDENT ANGLE AND 45° EXIT ANGLE |
| (0, 0, 0) | (10, 10, 10) | (11, 11, 11) | (12, 12, 12) | ... | (55, 55, 55) |
| (0, 0, 16) | (20, 30, 40) | (22, 32, 42) | (24, 34, 44) | ... | (110, 120, 130) |
| ... | ... | ... | ... | ... | ... |
| (255, 255, 255) | (90, 100, 80) | (91, 101, 81) | (92, 102, 82) | ... | (135, 145, 125) |

# FIG. 5B

EP 2 391 116 A1

# FIG. 6A

# FIG. 6B

# FIG. 7

```
          ┌──────────────┐
          │    START     │
          └──────┬───────┘
                 │
                 ▼
   ┌──────────────────────────────────┐
   │      CONVERT XYZ VALUE OF          │
   │ DIFFUSE COMPONENT INTO Lab VALUE   │──S2001
   └──────────────────┬─────────────────┘
                      │
                      ▼
   ┌──────────────────────────────────┐
   │ MAP Lab VALUE OF DIFFUSE COMPONENT │
   │   IN COLOR GAMUT OF MONITOR        │──S2002
   └──────────────────┬─────────────────┘
                      │
                      ▼
   ┌──────────────────────────────────┐
   │     CONVERT MAPPED Lab VALUE       │
   │        INTO XYZ VALUE              │──S2003
   └──────────────────┬─────────────────┘
                      │
                      ▼
          ┌──────────────┐
          │     END      │
          └──────────────┘
```

# FIG. 8

Lab$_{sp}$max
(45° INCIDENT ANGLE AND 45° EXIT ANGLE)

Lab$_{sp}$map

Lab$_{sp}$out

COLOR TRANSITION
CHARACTERISTIC

Lab$_{sp}$in

$\alpha$

Lab$_{df}$tbl( = Lab$_{df}$out = Lab$_{df}$in)

900

# FIG. 9

```
                    ┌─────────────┐
                    │    START    │
                    └─────────────┘
                           │
                           ▼
        ┌───────────────────────────────────────┐
        │        CONVERT DIFFUSE COMPONENT       │
        │    AND MAXIMUM GLOSSY COMPONENT         │──── S3001
        │  VALUE (XYZ VALUES) OF COLOR TRANSITION │
        │     CHARACTERISTIC INTO Lab VALUES      │
        └───────────────────────────────────────┘
                           │
                           ▼
        ┌───────────────────────────────────────┐
        │   MAP MAXIMUM GLOSSY COMPONENT VALUE    │──── S3002
        │        IN COLOR GAMUT OF MONITOR        │
        └───────────────────────────────────────┘
                           │
                           ▼
        ┌───────────────────────────────────────┐
        │ CONVERT XYZ VALUE OF GLOSSY COMPONENT   │──── S3003
        │   IN VIRTUAL ENVIRONMENT INTO Lab VALUE │
        └───────────────────────────────────────┘
                           │
                           ▼
        ┌───────────────────────────────────────┐
        │       CALCULATE TRANSITION DEGREE α     │──── S3004
        └───────────────────────────────────────┘
                           │
                           ▼
        ┌───────────────────────────────────────┐
        │     MAP GLOSSY COMPONENT IN VIRTUAL     │
        │    ENVIRONMENT ON COLOR TRANSITION      │──── S3005
        │      CHARACTERISTIC AFTER MAPPING       │
        │    BASED ON TRANSITION DEGREE α         │
        └───────────────────────────────────────┘
                           │
                           ▼
        ┌───────────────────────────────────────┐
        │   CONVERT Lab VALUE OF MAPPED GLOSSY    │──── S3006
        │      COMPONENT INTO XYZ VALUE           │
        └───────────────────────────────────────┘
                           │
                           ▼
                    ┌─────────────┐
                    │     END     │
                    └─────────────┘
```

# F I G. 10

Lab$_{sp}$max
(45° INCIDENT ANGLE AND 45° EXIT ANGLE)

Lab$_{sp}$map

Lab$_{sp}$out

Lab$_{bound}$

COLOR TRANSITION
CHARACTERISTIC

Lab$_{sp}$in

α

900

Lab$_{df}$tbl ( = Lab$_{df}$out = Lab$_{df}$in)

# FIG. 11

START

CONVERT XYZ VALUES OF ALL GLOSSY
COMPONENTS OF COLOR TRANSITION
CHARACTERISTIC INTO Lab VALUES — S4001

DETECT INTERSECTION POINT BETWEEN
COLOR TRANSITION CHARACTERISTIC
AND COLOR GAMUT BOUNDARY — S4002

CONVERT DIFFUSE COMPONENT
AND MAXIMUM GLOSSY COMPONENT
VALUE (XYZ VALUES) OF COLOR TRANSITION
CHARACTERISTIC INTO Lab VALUES — S4003

MAP MAXIMUM GLOSSY COMPONENT VALUE
IN COLOR GAMUT OF MONITOR — S4004

CALCULATE CURVE FOR MAPPING COLOR
TRANSITION CHARACTERISTIC — S4005

CONVERT XYZ VALUE OF GLOSSY COMPONENT
IN VIRTUAL ENVIRONMENT INTO Lab VALUE — S4006

CALCULATE TRANSITION DEGREE $\alpha$ — S4007

MAP GLOSSY COMPONENT IN VIRTUAL
ENVIRONMENT ON COLOR TRANSITION
CHARACTERISTIC AFTER MAPPING BASED ON
TRANSITION DEGREE $\alpha$ — S4008

CONVERT Lab VALUE OF MAPPED GLOSSY
COMPONENT INTO XYZ VALUE — S4009

END

# F I G. 12

START

GENERATE VIRTUAL ENVIRONMENT — S1001

OBTAIN INCIDENT ANGLE AND ANGLE IN VIEWPOINT DIRECTION AT PIXEL OF INTEREST OF VIRTUAL PRINTED MATERIAL — S5002

OBTAIN COLOR TRANSITION CHARACTERISTIC CORRESPONDING TO VALUE OF PIXEL OF INTEREST, INCIDENT ANGLE, AND ANGLE IN VIEWPOINT DIRECTION — S5003

CALCULATE DIFFUSE COMPONENT OF PIXEL OF INTEREST IN VIRTUAL ENVIRONMENT — S1003

PERFORM COLOR MATCHING PROCESS FOR DIFFUSE COMPONENT — S1004

CALCULATE GLOSSY COMPONENT OF PIXEL OF INTEREST IN VIRTUAL ENVIRONMENT — S1005

PERFORM COLOR MATCHING PROCESS FOR GLOSSY COMPONENT — S1006

SYNTHESIZE DIFFUSE AND GLOSSY COMPONENTS — S1007

S1008 — END OF PROCESSING ALL PIXELS?

NO → S1009 UPDATE PIXEL OF INTEREST

YES

END

# F I G. 13

| IMAGE DATA (RGB VALUE) | INCIDENT ANGLE | DIFFUSE COMPONENT (XYZ VALUE) (0° EXIT ANGLE) | GLOSSY COMPONENT (XYZ VALUE) | | | |
|---|---|---|---|---|---|---|
| | | | −89° EXIT ANGLE | −87° EXIT ANGLE | ⋯ | +90° EXIT ANGLE |
| (0, 0, 0) | −90 | (10, 10, 10) | (11, 11, 11) | (12, 12, 12) | ⋯ | (55, 55, 55) |
| | −89 | (11, 11, 11) | (12, 12, 12) | (13, 13, 13) | ⋯ | (56, 56, 56) |
| | ⋯ | (12, 12, 12) | (13, 13, 13) | (14, 14, 14) | ⋯ | (57, 57, 57) |
| | +90 | (13, 13, 13) | (14, 14, 14) | (15, 15, 15) | ⋯ | (58, 58, 58) |
| (0, 0, 16) | −90 | (20, 30, 40) | (22, 32, 42) | (23, 33, 43) | ⋯ | (110, 120, 130) |
| | −89 | (21, 31, 41) | (23, 33, 43) | (24, 34, 44) | ⋯ | (111, 121, 131) |
| | ⋯ | (22, 32, 42) | (24, 34, 44) | (25, 35, 45) | ⋯ | (112, 122, 132) |
| | +90 | (23, 33, 43) | (25, 35, 45) | (26, 36, 46) | ⋯ | (113, 123, 133) |
| ⋯ | ⋯ | ⋯ | ⋯ | ⋯ | ⋯ | ⋯ |
| (255, 255, 255) | −90 | (90, 100, 80) | (91, 101, 81) | (92, 102, 82) | ⋯ | (135, 145, 125) |
| | −89 | (91, 101, 81) | (91, 101, 81) | (93, 103, 83) | ⋯ | (136, 146, 126) |
| | ⋯ | (92, 102, 82) | (91, 101, 81) | (94, 104, 84) | ⋯ | (137, 147, 127) |
| | +90 | (93, 103, 83) | (94, 104, 84) | (95, 105, 85) | ⋯ | (138, 148, 128) |

EP 2 391 116 A1

Europäisches
Patentamt

European
Patent Office

Office européen
des brevets

## EUROPEAN SEARCH REPORT

Application Number

EP 11 16 3119

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/273819 A1 (HANAMOTO TAKASHI [JP]) 5 November 2009 (2009-11-05) * abstract; figure 6 * * paragraph [0048] - paragraph [0058] * ----- | 1-8 | INV. H04N1/60 |
| A | US 2007/291311 A1 (YANO FUMIKO [JP] ET AL) 20 December 2007 (2007-12-20) * abstract; figures 1,2,22,23 * * paragraph [0006] - paragraph [0019] * ----- | 1-8 | |
| A | US 5 774 146 A (MIZUTANI NORIO [JP]) 30 June 1998 (1998-06-30) * abstract * * column 4, line 44 - column 8, line 57 * ----- | 1-8 | |
| A | LAVERY A ET AL: "Color-Media Interactions in Ink Jet Printing", FINAL PROGRAM AND PROCEEDINGS OF IS&T'S NIP13: INTERNATIONAL CONFERENCE ON DIGITAL PRINTING TECHNOLOGIES. SEATTLE, WA, NOV. 2 - 7, 1997, SPRINGFIELD, VA : IS&T, US, vol. 13, 2 November 1997 (1997-11-02), pages 437-442, XP002406261, ISBN: 978-0-89208-205-6 * "image properties"figure 7 * ----- | 1-8 | TECHNICAL FIELDS SEARCHED (IPC) H04N |

The present search report has been drawn up for all claims

| Place of search | Date of completion of the search | Examiner |
|---|---|---|
| The Hague | 28 July 2011 | Beugin, Anne |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 11 16 3119

This annex lists the patent family members relating to the patent documents cited in the above-mentioned European search report.
The members are as contained in the European Patent Office EDP file on
The European Patent Office is in no way liable for these particulars which are merely given for the purpose of information.

28-07-2011

| Patent document cited in search report | | Publication date | Patent family member(s) | | Publication date |
|---|---|---|---|---|---|
| US 2009273819 | A1 | 05-11-2009 | JP 2009272705 | A | 19-11-2009 |
| US 2007291311 | A1 | 20-12-2007 | JP 2007331343 | A | 27-12-2007 |
| US 5774146 | A | 30-06-1998 | JP 9069960 | A | 11-03-1997 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009272705 A